Europäisches Patentamt

European Patent Office

Office européen des brevets

(19)

(11) Publication number: **0 334 408**
**A2**

# (12) EUROPEAN PATENT APPLICATION

(21) Application number: 89200431.8

(51) Int. Cl.⁴: **H04M 17/02**

(22) Date of filing: 22.02.89

| | |
|---|---|
| The title of the invention has been amended (Guidelines for Examination in the EPO, A-III, 7.3). | (71) Applicant: **GEC PLESSEY TELECOMMUNICATIONS LIMITED P.O. Box 53 Telephone Road Coventry, CV3 1HJ(GB)** |
| (30) Priority: **24.03.88 GB 8807051** | (72) Inventor: **Adams, Graham Frederick 92 Sandforth Road Liverpool, L12 1LW(GB)** |
| (43) Date of publication of application: **27.09.89 Bulletin 89/39** | |
| (84) Designated Contracting States: **BE DE ES FR GR IT LU NL SE** | (74) Representative: **Allen, Derek The Plessey Company plc Intellectual Property Department Vicarage Lane Ilford Essex, IG1 4AQ(GB)** |

(54) **Telephone apparatus with payphone option.**

(57) The apparatus is arranged to provide an interface between a subscribers telephone and the exchange line. The apparatus comprises a microprocessor controlling a payphone station. The microprocessor incorporates a mode switch permitting the telephone to be directly connected to the exchange line, where exchange metering pulses are used to cost calls, or connects the telephone to the payphone station in which coins are deposited for the cost of calls.

EP 0 334 408 A2

## TELECOMMUNICATIONS APPARATUS

The present invention relates to telecommunications apparatus.

The invention is particularly concerned with apparatus that interfaces a standard exchange line to give the subscriber the option of using the telephone in the usual manner where all metering is done at the exchange or to use the telephone as a payphone whereby the cost of use is carried out at the location of the telephone.

Hitherto, it is known to provide a standard telephone for use in conjunction with standard telephone lines connecting the telephone with an exchange. It is also known to provide payphone stations which are similarly connected to the exchange by way of standard lines and which rely upon metering pulses to be sent along the lines from the exchange to enable the payphone to charge for useage.

With the liberalisation of the user equipment end of the telephone system it is now possible to offer the subscriber various different options. One option is to permit the subscriber to use his telephone in the usual way, or to switch at will, to a local payphone station which does not require exchange metering pulses.

Accordingly, an aim of the present invention is to provide equipment which enables the subscriber to use his telephone in the usual manner or in a payphone mode.

According to the present invention there is provided apparatus which interfaces a subscriber's telephone with an exchange line, the apparatus being provided with processing means and payphone means which, under control of the processing means is arranged to accept, validate and cash coins deposited in the payphone means in respect of a chargeable telephone call, the apparatus is further provided with a mode switch means, which in a first position is arranged to connect the telephone so that it is used in conjunction with the payphone means, and in a second position is arranged to bypass the payphone means and connect the telephone directly to the exchange line.

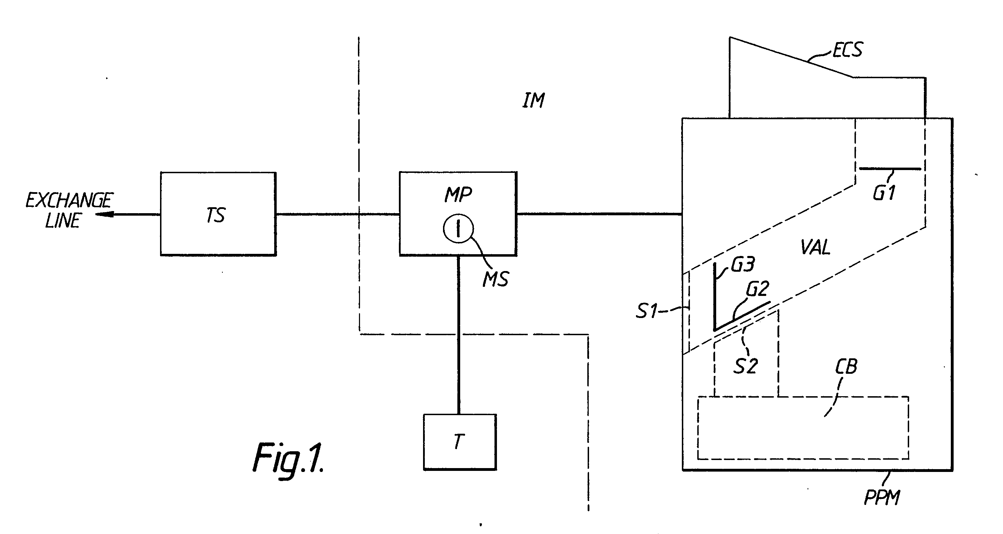

An embodiment of the present invention will now be described with reference to the accompanying drawing, Figure 1, which shows apparatus according to the present invention.

Referring to Figure 1, a telephone T is interfaced with a standard telephone socket TS by interfacing means IM. The socket TS is connected to a telephone exchange over an exchange line in the usual manner.

The interfacing means IM comprises a microporcessor MP and payphone means PPM. The microporcessor MP is used to compute and control the payphone means PPM when the telephone T is used in the payphone mode.

Conveniently the microprocessor MP can be housed in a box which plugs into the socket TS, and the payphone means PPM can be mounted close to the telephone T. The box which houses the microprocessor MP can also house a mode switch means MS which is key-operated by the subscriber to select a first position in which payphone mode is selected whereby the local payphone means PPM is brought into use, or to select a second position whereby the payphone means PPM is bypassed and the telephone T is directly connected to the exchange line and cost of usage is performed at the exchange.

When in the payphone mode, coins are deposited in the external coin store ECS. The gates G1, G2 and G3 are in the closed position and are controlled by the microprocessor MP. When the handset of the telephone T is lifted, gate G1 opens allowing the first coin to pass into the validator VAL. If the microporcessor MP determines the coin invalid gate G3 opens and allows the coin to be refunded. In so doing, the coin passes sensor S1 which permits gate G1 to open again to allow the next coin into the validator. A valid coin rest against gate G3 and gate G2. When a call is made and answered, gate G2 opens allowing the coin to pass into a cash box CB. In so doing, the coin passes sensor S2 which permits gate G1 to open again and allow the next coin into the validator. If the call is not answered, the handset is replaced and gate G3 opens to allow the coin to be refunded. Simultaneously gate G1 opens to allow any coins remaining in the external coin store ECS to be refunded.

The payphone apparatus may be provided with a display to inform the user the value of the coins deposited. The apparatus may also be provided with a "push to talk" button or a voice recognition system which activates a real time clock in the microprocessor to start the costing sequence for use of the telephone T.

The above description is not intended to limit the scope of the present invention. For example any type of telephone could be used. The payphone means can handle multi-denomination coins, inserted by way of a single slot, the smallest denomination being equivalent to the minimum fee.

The mode switch can also act a lock for the box containing the microprocessor.

## Claims

1. Telecommunications apparatus which interfaces a subscribers telephone with an exchange line, the apparatus being provided with processor means and payphone means which, under the control of the processing means, is arranged to accept, validate and cash coins deposited in the payphone means in respect of a chargeable telephone call, the apparatus is further provided with a mode switch means, which in a first position is arranged to connect the telephone line so that it is used in conjunction with the payphone means, and in a second position is arranged to bypass the payphone means and connect the telephone directly to the exchange line.

2. Telecommunications apparatus as claimed in Claim 1, wherein the mode switch means is arranged to be key-operated by the subscriber.

3. Telecommunications apparatus as claimed in Claim 2, wherein the microprocessor and mode switch means are housed in a box arranged to be plugged into a telephone socket for connection to the exchange line, and the mode-switch means is further arranged to form a lock for the box.

4. Telecommunications apparatus as claimed in claim 1 or 3, wherein the payphone means is provided with a first, second and third gates, first and second sensors and a coin validator, which, under control of the microprocessor, the first gate operates to allow a coin to enter the validator, and if determined invalid, the third gate operates to refund the coin, whereupon the first sensor detects the coin is being refunded and allows the first gate to operate to permit another coin to enter the validator.

5. Telecommunications apparatus as claimed in Claim 4 wherein a valid coin in payment for a telephone call is passed into a cash box from the validator by operation of the second gate, whereupon the second sensor detects the coin is being passed to the cash box and allows the first gate to operate to permit another coin to enter the validator.

Fig.1.